# EUROPEAN PATENT SPECIFICATION

(11) **EP 2 522 229 B1**
(45) Date of publication and mention of the grant of the patent: **13.11.2013**
(21) Application number: 12178340.1
(22) Date of filing: 22.09.2009
(51) Int. Cl.: A23G 3/00, A23G 3/02, A23G 3/20, A23G 4/20, A23G 4/04, A23G 1/00, A23G 3/34, A23G 3/54, A23L 1/00

(54) **Confectionery and methods of production thereof**
Süßwaren und Verfahren zu deren Herstellung
Confiserie et ses procédés de production

(30) Priority: 23.09.2008 GB 0817367
(43) Date of publication of application: 14.11.2012
(62) Divisional of application: 09736617.3
(73) Proprietor: Cadbury UK Limited, Birmingham, West Midlands B30 2LU (GB)
(72) Inventor: Vaman, Shama, London, Greater London SW6 6BH (GB); Pearson, Sarah, Jane, Prestwood, Canberra, Australian Capital Territory 2913 (AU); Norton, Clive, Richard, Thomas, Shinfield, RG2 9EF (GB)
(74) Representative: Wilson Gunn

(56) References cited:
- EP-A- 1 151 673
- WO-A-2005/056272
- WO-A-2007/056685
- WO-A-2008/044122
- US-A1- 2002 136 812

## Description

### Technical Field of the Invention

The present invention relates to confectionery and method of production thereof. In particular, the invention relates to confectionery comprising a plurality of capillaries which may contain a fluid.

### Background to the Invention

It is desirable to produce confectionery formed of different components, so as to increase sensory pleasure. A number of confectionery products exist, which have a flavoured liquid or syrup centre which is released upon chewing. For example, WO2007056685 discloses an apparatus and method for the continuous production of centre-filled confectionery products in the format of a continuous extrudate having a plurality of centre-filled confectionery ropes. Whilst a product formed from such an apparatus does increase sensory pleasure, the period of pleasure is often short lived as the centre is released quickly and/or degraded. It is therefore an object of the present invention to provide a confectionery product which can release a fluid centre over an extended period of time.

There is also a demand for providing confectionery having a reduced fat or sugar content. It is thus a further object of the present invention to provide a confectionery product which can be produced having a lowered fat or sugar content, whilst still maintaining an excellent sensory pleasure.

It is an aim of an embodiment or embodiments of the present invention to overcome one or more of the problems of the prior art. It is also an aim of one of the embodiments of the present invention to provide a confectionery having an extended fluid fill release profile and a method of manufacture thereof. It is also a further aim of the present invention to provide a confectionery which has a reduced fat and/or sugar profile and a method of manufacture thereof.

### Summary of the Invention

According to an embodiment of the present invention, there is provided a confectionery product comprising an extruded body portion, the body portion having a plurality of capillaries disposed therein, one or more of the capillaries being at least partially filled with a fill material which is a different material from that of the extruded body portion, the fill material comprising an active and/or reactive component and wherein two or more different active/reactive components are provided in the same or different capillaries.

The present invention therefore provides for a confectionery product which can be used in confectionery having an extended release of a material inserted into the capillaries, or a confectionery product having a large voidage so as to reduce the amount confectionery material used in the product, whilst maintaining the overall size of the product.

By providing a product which may have two or more capillaries at least partially filled with different fill materials, the confectionery product can have different taste and/or texture profiles at different parts of the product or during consumption.

The two or more different active/reactive components may be configured in the capillaries so that the different components are mixed together when the product is consumed. If desired, the active/reactive component may be activated by consumption of the confectionery product. Such activation may be the mixing of two different compounds located in two different capillaries, or the activation of a compound by contact with saliva.

Two or more capillaries may be at least partially filled with different fill materials.

The active and/or reactive component may be encapsulated. The skilled addressee will be aware of a range of compositions which are used in encapsulating active and/or reactive compositions in confectionery.

An "active/reactive component" may be selected from any one or more of the following: flavour agents; oral care actives; sweetening agents; physiological cooling agents; warming agents; colouring agents; effervescence agents, pharmaceutical agents, nutraceutical agents, botanical extracts, teeth whitening agents and combinations thereof. Such agents will be apparent to the skilled addressee.

More particularly, active/reactive components may include, but are not limited to: colour and flavour, multiple flavours, multiple colours, cooling agent and flavour, warming agent and flavour, cooling agent and warming agent, cooling agent and high intensity sweetener, warming agent and high intensity sweetener, multiple cooling agents (e.g., WS-3 and WS-23, WS-3 and menthyl succinate), menthol and one or more cooling agents, menthol and one or more warming agents, multiple warming agents, high intensity sweetener(s) and tooth whitening active(s), high intensity sweetener(s) and breath freshening active(s), an ingredient with some bitterness and a bitterness suppressor for the ingredient, multiple high intensity sweeteners (e.g., ace-k and aspartame), multiple tooth whitening actives (e.g., an abrasive ingredient and an antimicrobial ingredient, a peroxide and a nitrate, a warming agent and a polyol, a cooling agent and a polyol, multiple polyols, a warming agent and micronutrient, a cooling agent and a micronutrient, a warming agent and a mouth moistening agent, a cooling agent and a mouth moistening agent, a warming agent and a throat care agent, a cooling agent and a throat care agent, a warming agent and a food acid, a cooling agent and food acid, a warming agent and an emulsifier/surfactant, a cooling agent and an emulsifier/surfactant, a warming agent and a color, a cooling agent and a color, a warming agent and a flavor potentiator, a cooling agent and a flavor potentiator, a warming agent with sweetness potentiator, a cooling agent with a sweetness potentiator, a warming agent and an appetite suppressant, a cooling agent and an appetite suppressant, a high intensity sweetener and a flavor, a cooling agent and a teeth whitening agent, a warming agent and a teeth whitening agent, a warming agent and breath freshening agent, a cooling agent and a breath freshening agent, a cooling agent and an effervescing system, a warming agent and an effervescing system, a warming agent and an antimicrobial agent, a cooling agent and an antimicrobial agent, multiple anticalculus ingredients, multiple remineralization ingredients, multiple surfactants, remineralization ingredients with demineralization ingredients, acidic ingredients with acid buffering ingredients, anticalculus ingredients with antibacterial ingredients, remineralization ingredients with anticalculus ingredients, anticalculus ingredients with remineralization ingredients with antibacterial ingredients, surfactant ingredients with anticalculus ingredients, surfactant ingredients with antibacterial ingredients, surfactant ingredients with remineralization ingredients, surfactants with anticalculus ingredients with antibacterial ingredients, multiple types of vitamins or minerals, multiple micronutrients, multiple acids, multiple antimicrobial ingredients, multiple breath freshening ingredients, breath freshening ingredients and antimicrobial ingredients, multiple appetite suppressors, acids and bases that react to effervesce, a bitter compound with a high intensity sweetener, a cooling agent and an appetite suppressant, a warming agent and an appetite suppressant, a high intensity sweetener and an appetite suppressant, a high intensity sweetener with an acid, a probiotic ingredient and a prebiotic ingredient, a vitamin and a mineral, a metabolic enhancement ingredient with a macronutrient, a metabolic enhancement ingredient with a micronutrient, an enzyme with a substrate, a high intensity sweetener with a sweetness potentiator, a cooling compound with a cooling potentiator, a flavor with a flavor potentiator, a warming compound with a warming potentiator, a flavor with salt, a high intensity sweetener with salt, an acid with salt, a cooling compound with salt, a warming compound with salt, a flavor with a surfactant, an astringent compound with an ingredient to provide a sensation of hydration, etc. In some embodiments, the multiple ingredients may be part of the same delivery system or may be part of different delivery systems. Sensate compounds can include cooling agents, warming agents, tingling agents, effervescent agents, and combinations thereof. A variety of well known cooling agents may be employed. For example, among the useful cooling agents are included xylitol, erythritol, dextrose, sorbitol, menthane, menthone, ketals, menthone ketals, menthone glycerol ketals, substituted p-menthanes, acyclic carboxamides, mono menthyl glutarate, substituted cyclohexanamides, substituted cyclohexane carboxamides, substituted ureas and sulfonamides, substituted menthanols, hydroxymethyl and hydroxymethyl derivatives of p-menthane, 2-mercapto-cyclo-decanone, hydroxycarboxylic acids with 2-6 carbon atoms, cyclohexanamides, menthyl acetate, menthyl salicylate, N,2,3-trimethyl-2-isopropyl butanamide (WS-23), N-ethyl-p-menthane-3-carboxamide (WS-3), isopulegol, 3-(1-menthoxy)propane-1,2-diol, 3-(1-menthoxy)-2-methylpropane-1,2-diol, p-menthane-2,3-diol, p-menthane-3,8-diol, 6-isopropyl-9-methyl-1,4-dioxaspiro[4,5]decane-2-methanol, menthyl succinate and its alkaline earth metal salts, trimethylcyclohexanol, N-ethyl-2-isopropyl-5-methylcyclohexanecarboxamide, Japanese mint oil, peppermint oil, 3-(1-menthoxy)ethan-1-ol, 3-(1-menthoxy)propan-1-ol, 3-(1-menthoxy)butan-1-ol, 1-menthylacetic acid N-ethylamide, 1-menthyl-4-hydroxypentanoate, 1-menthyl-3-hydroxybutyrate, N,2,3-trimethyl-2-(1-methylethyl)-butanamide, n-ethyl-t-2-c-6 nonadienamide, N,N-dimethyl menthyl succinamide, substituted p-menthanes, substituted p-menthane-carboxamides, 2-isopropanyl-5-methylcyclohexanol (from Hisamitsu Pharmaceuticals, hereinafter "isopregol"); menthone glycerol ketals (FEMA 3807, tradename FRESCOLAT(R) type MGA); 3-1-menthoxypropane-1,2-diol (from Takasago, FEMA 3784); and menthyl lactate; (from Haarman & Reimer, FEMA 3748, tradename FRESCOLAT((R) type ML), WS-30, WS-14, Eucalyptus extract (p-Mehtha-3,8-Diol), Menthol (its natural or synthetic derivatives), Menthol PG carbonate, Menthol EG carbonate, Menthol glyceryl ether, N-tertbutyl-p-menthane-3-carboxamide, P-menthane-3-carboxylic acid glycerol ester, Methyl-2-isopryl-bicyclo (2.2.1), Heptane-2-carboxamide; and Menthol methyl ether, and menthyl pyrrolidone carboxylate among others. These and other suitable cooling agents are further described in the following U.S. patents, all of which are incorporated in their entirety by reference hereto: U.S. Pat. Nos. 4,230,688; 4,032,661; 4,459,425; 4,136,163; 5,266,592; 6,627,233. In some embodiments, warming components may be selected from a wide variety of compounds known to provide the sensory signal of warming to the user. These compounds offer the perceived sensation of warmth, particularly in the oral cavity, and often enhance the perception of flavors, sweeteners and other organoleptic components. In some embodiments, useful warming compounds can include vanillyl alcohol n-butylether (TK-1000) supplied by Takasago Perfumary Company Limited, Tokyo, Japan, vanillyl alcohol n-propylether, vanillyl alcohol isopropylether, vanillyl alcohol isobutylether, vanillyl alcohol n-aminoether, vanillyl alcohol isoamyleather, vanillyl alcohol n-hexyleather, vanillyl alcohol methylether, vanillyl alcohol ethylether, gingerol, shogaol, paradol, zingerone, capsaicin, dihydrocapsaicin, nordihydrocapsaicin, homocapsaicin, homodihydrocapsaicin, ethanol, isopropyl alcohol, iso-amylalcohol, benzyl alcohol, glycerine, and combinations thereof.

In some embodiments, a tingling sensation can be provided. One such tingling sensation is provided by adding jambu, oleoresin, or spilanthol to some examples. In some embodiments, alkylamides extracted from materials such as jambu or sanshool can be included. Additionally, in some embodiments, a sensation is created due to effervescence. Such effervescence is created by combining an alkaline material with an acidic material. In some embodiments, an alkaline material can include alkali metal carbonates, alkali metal bicarbonates, alkaline earth metal carbonates, alkaline earth metal bicarbonates and mixtures thereof. In some embodiments, an acidic material can include acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof. Examples of "tingling" type sensates can be found in U.S. Pat. No. 6,780,443, the entire contents of which are incorporated herein by reference for all purposes.

Sensate components may also be referred to as "trigeminal stimulants" such as those disclosed in U.S. Patent Application No. 205/0202118, which is incorporated herein by reference. Trigeminal stimulants are defined as an orally consumed product or agent that stimulates the trigeminal nerve. Examples of cooling agents which are trigeminal stimulants include menthol, WS-3, N-substituted p-menthane carboxamide, acyclic carboxamides including WS-23, methyl succinate, menthone glycerol ketals, bulk sweeteners such as xylitol, erythritol, dextrose, and sorbitol, and combinations thereof. Trigeminal stimulants can also include flavors, tingling agents, Jambu extract, vanillyl alkyl ethers, such as vanillyl n-butyl ether, spilanthol, Echinacea extract, Northern Prickly Ash extract, capsaicin, capsicum oleoresin, red pepper oleoresin, black pepper oleoresin, piperine, ginger oleoresin, gingerol, shoagol, cinnamon oleoresin, cassia oleoresin, cinnamic aldehyde, eugenol, cyclic acetal of vanillin and menthol glycerin ether, unsaturated amides, and combinations thereof.

Breath fresheners can include essential oils as well as various aldehydes, alcohols, and similar materials. In some embodiments, essential oils can include oils of spearmint, peppermint, wintergreen, sassafras, chlorophyll, citral, geraniol, cardamom, clove, sage, carvacrol, eucalyptus, cardamom, magnolia bark extract, marjoram, cinnamon, lemon, lime, grapefruit, and orange. In some embodiments, aldehydes such as cinnamic aldehyde and salicylaldehyde can be used. Additionally, chemicals such as menthol, carvone, iso-garrigol, and anethole can function as breath fresheners. Of these, the most commonly employed are oils of peppermint, spearmint and chlorophyll.

In addition to essential oils and chemicals derived from them, in some embodiments breath fresheners can include but are not limited to zinc citrate, zinc acetate, zinc fluoride, zinc ammonium sulfate, zinc bromide, zinc iodide, zinc chloride, zinc nitrate, zinc flurosilicate, zinc gluconate, zinc tartarate, zinc succinate, zinc formate, zinc chromate, zinc phenol sulfonate, zinc dithionate, zinc sulfate, silver nitrate, zinc salicylate, zinc glycerophosphate, copper nitrate, chlorophyll, copper chlorophyll, chlorophyllin, hydrogenated cottonseed oil, chlorine dioxide, beta cyclodextrin, zeolite, silica-based materials, carbon-based materials, enzymes such as laccase, and combinations thereof. In some embodiments, the release profiles of probiotics can be managed for, but not limited to, lactic acid producing microorganisms such as Bacillus coagulans, Bacillus subtilis, Bacillus laterosporus, Bacillus laevolacticus, Sporolactobacillus inulinus, Lactobacillus acidophilus, Lactobacillus curvatus, Lactobacillus plantarum, Lactobacillus jenseni, Lactobacillus casei, Lactobacillus fermentum, Lactococcus lactis, Pedioccocus acidilacti, Pedioccocus pentosaceus, Pedioccocus urinae, Leuconostoc mesenteroides, Bacillus coagulans, Bacillus subtilis, Bacillus laterosporus, Bacillus laevolacticus, Sporolactobacillus inulinus and mixtures thereof. Breath fresheners are also known by the following trade names: Retsyn,(TM) Actizol,(TM) and Nutrazin.(TM) Examples of malodor-controlling compositions are also included in U.S. Pat. No. 5,300,305 to Stapler et al. and in U.S. Patent Application Publication Nos. 2003/0215417 and 2004/0081713.

Dental care ingredients (also known as oral care ingredients) may include but are not limited to tooth whiteners, stain removers, oral cleaning, bleaching agents, desensitizing agents, dental remineralization agents, antibacterial agents, anticaries agents, plaque acid buffering agents, surfactants and anticalculus agents. Non-limiting examples of such ingredients can include, hydrolytic agents including proteolytic enzymes, abrasives such as hydrated silica, calcium carbonate, sodium bicarbonate and alumina, other active stain-removing components such as surface-active agents, including, but not limited to anionic surfactants such as sodium stearate, sodium palminate, sulfated butyl oleate, sodium oleate, salts of fumaric acid, glycerol, hydroxylated lecithin, sodium lauryl sulfate and chelators such as polyphosphates, which are typically employed as tartar control ingredients. In some embodiments, dental care ingredients can also include tetrasodium pyrophosphate and sodium tri-polyphosphate, sodium bicarbonate, sodium acid pyrophosphate, sodium tripolyphosphate, xylitol, sodium hexametaphosphate.

In some embodiments, peroxides such as carbamide peroxide, calcium peroxide, magnesium peroxide, sodium peroxide, hydrogen peroxide, and peroxydiphospate are included. In some embodiments, potassium nitrate and potassium citrate are included. Other examples can include casein glycomacropeptide, calcium casein peptone-calcium phosphate, casein phosphopeptides, casein phosphopeptide-amorphous calcium phosphate (CPP-ACP), and amorphous calcium phosphate. Still other examples can include papaine, krillase, pepsin, trypsin, lysozyme, dextranase, mutanase, glycoamylase, amylase, glucose oxidase, and combinations thereof.

Further examples can include surfactants such as sodium stearate, sodium ricinoleate, and sodium lauryl sulfate surfactants for use in some embodiments to achieve increased prophylactic action and to render the dental care ingredients more cosmetically acceptable. Surfactants can preferably be detersive materials which impart to the composition detersive and foaming properties. Suitable examples of surfactants are water-soluble salts of higher fatty acid monoglyceride monosulfates, such as the sodium salt of the monosulfated monoglyceride of hydgrogenated coconut oil fatty acids, higher alkyl sulfates such as sodium lauryl sulfate, alkyl aryl sulfonates such as sodium dodecyl benzene sulfonate, higher alkyl sulfoacetates, sodium lauryl sulfoacetate, higher fatty acid esters of 1,2-dihydroxy propane sulfonate, and the substantially saturated higher aliphatic acyl amides of lower aliphatic amino carboxylic acid compounds, such as those having 12 to 16 carbons in the fatty acid, alkyl or acyl radicals, and the like. Examples of the last mentioned amides are N-lauroyl sarcosine, and the sodium, potassium, and ethanolamine salts ofN-lauroyl, N-myristoyl, or N-palmitoyl sarcosine.

In addition to surfactants, dental care ingredients can include antibacterial agents such as, but not limited to, triclosan, chlorhexidine, zinc citrate, silver nitrate, copper, limonene, and cetyl pyridinium chloride. In some embodiments, additional anticaries agents can include fluoride ions or fluorine-providing components such as inorganic fluoride salts. In some embodiments, soluble alkali metal salts, for example, sodium fluoride, potassium fluoride, sodium fluorosilicate, ammonium fluorosilicate, sodium monofluorophosphate, as well as tin fluorides, such as stannous fluoride and stannous chloride can be included. In some embodiments, a fluorine-containing compound having a beneficial effect on the care and hygiene of the oral cavity, e.g., diminution of enamel solubility in acid and protection of the teeth against decay may also be included as an ingredient. Examples thereof include sodium fluoride, stannous fluoride, potassium fluoride, potassium stannous fluoride (SnF.sub.2-KF), sodium hexafluorostannate, stannous chlorofluoride, sodium fluorozirconate, and sodium monofluorophosphate. In some embodiments, urea is included. [0201] Further examples are included in the following U.S. patents and U.S. published patent applications: U.S. Pat. No. 5,227,154 to Reynolds, U.S. Pat. No. 5,378,131 to Greenberg, U.S. Pat. No. 6,846,500 to Luo et al., U.S. Pat. No. 6,733,818 to Luo et al., U.S. Pat. No. 6,696,044 to Luo et al., U.S. Pat. No. 6,685,916 to Holme et al., U.S. Pat. No. 6,485,739 to Luo et al., U.S. Pat. No. 6,479,071 to Holme et al., U.S. Pat. No. 6,471,945 to Luo et al., U.S. Patent Publication Nos. 20050025721 to Holme et al., 2005008732 to Gebreselassie et al., and 20040136928 to Holme et al.

Throat soothing ingredients can include analgesics, anesthetics, demulcents, antiseptic, and combinations thereof. In some embodiments, analgesics/anesthetics can include menthol, phenol, hexylresorcinol, benzocaine, dyclonine hydrochloride, benzyl alcohol, salicyl alcohol, and combinations thereof. In some embodiments, demulcents can include but are not limited to slippery elm bark, pectin, gelatin, and combinations thereof. In some embodiments, antiseptic ingredients can include cetylpyridinium chloride, domiphen bromide, dequalinium chloride, and combinations thereof.

In some embodiments, antitussive ingredients such as chlophedianol hydrochloride, codeine, codeine phosphate, codeine sulfate, dextromethorphan, dextromethorphan hydrobromide, diphenhydramine citrate, and diphenhydramine hydrochloride, and combinations thereof can be included.

In some embodiments, throat soothing agents such as honey, propolis, aloe vera, glycerine, menthol and combinations thereof can be included. In still other embodiments, cough suppressants can be included. Such cough suppressants can fall into two groups: those that alter the consistency or production of phlegm such as mucolytics and expectorants; and those that suppress the coughing reflex such as codeine (narcotic cough suppressants), antihistamines, dextromethorphan and isoproterenol (non-narcotic cough suppressants). In some embodiments, ingredients from either or both groups can be included.

In still other embodiments, antitussives can include, but are not limited to, the group consisting of codeine, dextromethorphan, dextrorphan, diphenhydramine, hydrocodone, noscapine, oxycodone, pentoxyverine and combinations thereof. In some embodiments, antihistamines can include, but are not limited to, acrivastine, azatadine, brompheniramine, chlorpheniramine, clemastine, cyproheptadine, dexbrompheniramine, dimenhydrinate, diphenhydramine, doxylamine, hydroxyzine, meclizine, phenindamine, phenyltoloxamine, promethazine, pyrilamine, tripelennamine, triprolidine and combinations thereof. In some embodiments, non-sedating antihistamines can include, but are not limited to, astemizole, cetirizine, ebastine, fexofenadine, loratidine, terfenadine, and combinations thereof.

In some embodiments, expectorants can include, but are not limited to, ammonium chloride, guaifenesin, ipecac fluid extract, potassium iodide and combinations thereof. In some embodiments, mucolytics can include, but are not limited to, acetylcycsteine, ambroxol, bromhexine and combinations thereof. In some embodiments, analgesic, antipyretic and anti-inflammatory agents can include, but are not limited to, acetaminophen, aspirin, diclofenac, diflunisal, etodolac, fenoprofen, flurbiprofen, ibuprofen, ketoprofen, ketorolac, nabumetone, naproxen, piroxicam, caffeine and mixtures thereof. In some embodiments, local anesthetics can include, but are not limited to, lidocaine, benzocaine, phenol, dyclonine, benzonotate and mixtures thereof.

In some embodiments nasal decongestants and ingredients that provide the perception of nasal clearing can be included. In some embodiments, nasal decongestants can include but are not limited to phenylpropanolamine, pseudoephedrine, ephedrine, phenylephrine, oxymetazoline, and combinations thereof. In some embodiments ingredients that provide a perception of nasal clearing can include but are not limited to menthol, camphor, borneol, ephedrine, eucalyptus oil, peppermint oil, methyl salicylate, bornyl acetate, lavender oil, wasabi extracts, horseradish extracts, and combinations thereof. In some embodiments, a perception of nasal clearing can be provided by odoriferous essential oils, extracts from woods, gums, flowers and other botanicals, resins, animal secretions, and synthetic aromatic materials.

In some embodiments, one or more colors can be included. As classified by the United States Food, Drug, and Cosmetic Act (21 C.F.R. 73), colors can include exempt from certification colors (sometimes referred to as natural even though they can be synthetically manufactured) and certified colors (sometimes referred to as artificial), or combinations thereof. In some embodiments, exempt from certification or natural colors can include, but are not limited to annatto extract, (E160b), bixin, norbixin, astaxanthin, dehydrated beets (beet powder), beetroot red/betanin (E162), ultramarine blue, canthaxanthin (E161g), cryptoxanthin (E161c), rubixanthin (E161d), violanxanthin (E161e), rhodoxanthin (E161f), caramel (E150(a-d)), [beta]-apo-8'-carotenal (E160e), [beta]-carotene (E160a), alpha carotene, gamma carotene, ethyl ester of beta-apo-8 carotenal (E160f), flavoxanthin (E161a), lutein (E161b), cochineal extract (E120); carmine (E132), carmoisine/azorubine (E122), sodium copper chlorophyllin (E141), chlorophyll (E140), toasted partially defatted cooked cottonseed flour, ferrous gluconate, ferrous lactate, grape color extract, grape skin extract (enocianina), anthocyanins (E163), haematococcus algae meal, synthetic iron oxide, iron oxides and hydroxides (E172), fruit juice, vegetable juice, dried algae meal, tagetes (Aztec marigold) meal and extract, carrot oil, corn endosperm oil, paprika, paprika oleoresin, phaffia yeast, riboflavin (E101), saffron, titanium dioxide, turmeric (E100), turmeric oleoresin, amaranth (E123), capsanthin/capsorbin (E160c), lycopene (E160d), and combinations thereof.

In some embodiments, certified colors can include, but are not limited to, FD&C blue #1, FD&C blue #2, FD&C green #3, FD&C red #3, FD&C red #40, FD&C yellow #5 and FD&C yellow #6, tartrazine (E102), quinoline yellow (E104), sunset yellow (E110), ponceau (E 124), erythrosine (E127), patent blue V (E131), titanium dioxide (E171), aluminium (E173), silver (E174), gold (E175), pigment rubine/lithol rubine BK (E180), calcium carbonate (E170), carbon black (E153), black PN/brilliant black BN (E151), green S/acid brilliant green BS (E142), and combinations thereof. In some embodiments, certified colors can include FD&C aluminum lakes. These consist of the aluminum salts of FD&C dyes extended on an insoluble substrate of alumina hydrate. Additionally, in some embodiments, certified colors can be included as calcium salts.

Mouth moisteners can include, but are not limited to, saliva stimulators such as acids and salts and combinations thereof In some embodiments, acids can include acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof.

Mouth moisteners can also include hydrocolloid materials that hydrate and may adhere to oral surface to provide a sensation of mouth moistening. Hydrocolloid materials can include naturally occurring materials such as plant exudates, seed gums, and seaweed extracts or they can be chemically modified materials such as cellulose, starch, or natural gum derivatives. In some embodiments, hydrocolloid materials can include pectin, gum arabic, acacia gum, alginates, agar, carageenans, guar gum, xanthan gum, locust bean gum, gelatin, gellan gum, galactomannans, tragacanth gum, karaya gum, curdlan, konjac, chitosan, xyloglucan, beta glucan, furcellaran, gum ghatti, tamarin, bacterial gums, and combinations thereof. Additionally, in some embodiments, modified natural gums such as propylene glycol alginate, carboxymethyl locust bean gum, low methoxyl pectin, and their combinations can be included. In some embodiments, modified celluloses can be included such as microcrystalline cellulose, carboxymethlcellulose (CMC), methylcellulose (MC), hydroxypropylmethylcellulose (HPCM), and hydroxypropylcellulose (MPC), and combinations thereof.

Similarly, humectants which can provide a perception of mouth hydration can be included. Such humectants can include, but are not limited to glycerol, sorbitol, polyethylene glycol, erythritol, and xylitol. Additionally, in some embodiments, fats can provide a perception of mouth moistening. Such fats can include medium chain triglycerides, vegetable oils, fish oils, mineral oils, and combinations thereof.

Food Acids can include, but are not limited to acetic acid, adipic acid, ascorbic acid, butyric acid, citric acid, formic acid, fumaric acid, glyconic acid, lactic acid, phosphoric acid, malic acid, oxalic acid, succinic acid, tartaric acid and combinations thereof.

Micronutrients can include materials that have an impact on the nutritional well being of an organism even though the quantity required by the organism to have the desired effect is small relative to macronutrients such as protein, carbohydrate, and fat. Micronutrients can include, but are not limited to vitamins, minerals, enzymes, phytochemicals, antioxidants, and combinations thereof.

In some embodiments, vitamins can include fat soluble vitamins such as vitamin A, vitamin D, vitamin E, and vitamin K and combinations thereof. In some embodiments, vitamins can include water soluble vitamins such as vitamin C (ascorbic acid), the B vitamins (thiamine or B1, riboflavoin or B2, niacin or B3, pyridoxine or B6, folic acid or B9, cyanocobalimin or B12, pantothenic acid, biotin), and combinations thereof. Fats may comprise nutritional oils, including various fish oils (such as cod liver oil) and constituents compounds thereof.

In some embodiments minerals can include but are not limited to sodium, magnesium, chromium, iodine, iron, manganese, calcium, cropper, fluoride, potassium, phosphorous, molybdenum, selenium, zinc, and combinations thereof. In some embodiments micronutrients can include but are not limited to L-carnitine, choline, coenzyme Q10, alpha-lipoic acid, omega-3-fatty acids, pepsin, phytase, trypsin, lipases, proteases, cellulases, and combinations thereof.

Antioxidants can include materials that scavenge free radicals. In some embodiments, antioxidants can include but are not limited to ascorbic acid, citric acid, rosemary oil, vitamin A, vitamin E, vitamin E phosphate, tocopherols, di-alpha-tocopheryl phosphate, tocotrienols, alpha lipoic acid, dihydrolipoic acid, xanthophylls, beta cryptoxanthin, lycopene, lutein, zeaxanthin, astaxanthin, beta-carotene, carotenes, mixed carotenoids, polyphenols, flavonoids, and combinations thereof.

In some embodiments phytochemicals can include but are not limited to cartotenoids, chlorophyll, chlorophyllin, fiber, flavanoids, anthocyanins, cyaniding, delphinidin, malvidin, pelargonidin, peonidin, petunidin, flavanols, catechin, epicatechin, epigallocatechin, epigallocatechingallate, theaflavins, thearubigins, proanthocyanins, flavonols, quercetin, kaempferol, myricetin, isorhamnetin, flavononeshesperetin, naringenin, eriodictyol, tangeretin, flavones, apigenin, luteolin, lignans, phytoestrogens, resveratrol, isoflavones, daidzein, genistein, glycitein, soy isoflavones, and combinations thereof.

An effervescent system may include one or more edible acids and one or more edible alkaline materials. The edible acid(s) and the edible alkaline material(s) may react together to generate effervescence.

In some embodiments, the alkaline material(s) may be selected from, but is not limited to, alkali metal carbonates, alkali metal bicarbonates, alkaline earth metal carbonates, alkaline earth metal bicarbonates, and combinations thereof. The edible acid(s) may be selected from, but is not limited to, citric acid, phosphoric acid, tartaric acid, malic acid, ascorbic acid, and combinations thereof. In some embodiments, an effervescing system may include one or more other ingredients such as, for example, carbon dioxide, oral care ingredients, flavorants, etc.

For examples of use of an effervescing system, reference is made to U.S. Provisional Patent No. 60/618,222 filed Oct. 13, 2004, and entitled "Effervescent Pressed Gum Tablet Compositions," the contents of which are incorporated herein by reference for all purposes. Other examples can be found in U.S. Pat. No. 6,235,318.

If desired, the fill material may additionally comprise particulate material. The particulate material may be used for a number of purposes, such as sensory agents to provide a "crunch" when the product is being chewed, or to provide an abrasive agent to help clean/whiten teeth.

Examples of abrasive agents include silicas, aluminas, phosphates, carbonates and combinations thereof. In some embodiments, the abrasive agent is a silica selected from: precipitated silica, silica gels and combinations thereof. Moreover, in some embodiments the abrasive agent is selected from the following: calcium carbonate, sodium bicarbonate, sodium metaphosphate, potassium metaphosphate, tricalcium phosphate, dehydrated dicalcium phosphate and combinations thereof. The abrasive polishing material contemplated for use in the compositions of the present invention can be any material which does not excessively abrade dentin.

The material used to produce the body portion may comprise a number of materials commonly use in the production of confectionery - such as candy, gum and chocolate etc.

In some embodiments, the body portion is chocolate. Suitable chocolate includes dark, milk, white and compound chocolate. In some embodiments, the body portion is chewing gum, bubble gum or gum base. In other embodiments, the body portion is candy. Suitable candy includes hard candy, chewy candy, gummy candy, jelly candy, toffee, fudge, nougat and the like.

The capillaries may extend along the substantially entire length of the body portion, but may in some embodiment extend no less than 75%, 80%, 90%, 95% or 99% along the length of the body portion (for example, when it is desired to seal the ends of the body portion). If the capillaries extend along the entire length of body portion, suitably the ends of the capillaries are visible at one or more ends of the body portion.

Different capillaries may incorporate different materials if desired. The capillaries may be filled with liquid. The capillaries may be filled with a material which is solid at a room temperature and fluid at a temperature greater than room temperature. For example, a molten chocolate may be incorporated into the capillaries and allowed to set when cooled to room temperature. It will be apparent to the skilled addressee that room temperature is commonly regarded as around 20°C. Alternatively, the capillaries may be filled with a material which is deposited as a liquid and which subsequently solidifies. In such embodiments, the solidification may be dependent or independent of heat. It will be apparent that solidification of a liquid filled capillary may be achieved in a number of ways.

For example solidification may take place due to one or more of the following:
Cooling - the filling may be molten when deposited which then cools to a solid at room temperature;
Heating - the filling may be liquid when deposited, and the heat of the extruded body portion sets the filling (e.g. pumping egg albumen into a hot hard candy extruded body portion will set the egg on contact);
Drying - the filling may be a solution that dries into a solid (e.g. the moisture from the solution is absorbed into the extruded body portion);
Solvent loss - the filling may be in a solvent, whereby the solvent is absorbed into the extruded body portion, leaving a solid;
Chemical reaction - the filling may be deposited as a liquid but reacts or "goes off' into a solid;
Cross-linking - the filling may form a constituents for a cross-linked material due to mixing and/or heating; and
Time - the filling may simply set with time (e.g. a solution of sugars and gelatin will eventually set over time).

The body portion may be formed from a material which is liquid during extrusion. It should be understood that the term "liquid" is intended to mean that the material is capable or has a readiness to flow, including gels, pastes and plasticized chocolate. Furthermore, this term is intended to include (but not limited to) those materials which may be "molten" during extrusion and the skilled addressee will understand that the term "molten" means that the material has been reduced to a liquid form or a form which exhibits the properties of a liquid.

The body portion may be at least partially or substantially solid, so that it can no longer be considered to flow in a liquid form.

Suitable filling materials for the capillaries include, but are not limited to, aqueous media, fats, chocolate, caramel, cocoa butter, fondant, syrups, peanut butter, jam, jelly, gels, truffle, praline, chewy candy, hard candy or any combination or mixture thereof.

If desired, the product may further comprise a coating portion to envelop the body portion. The skilled addressee will appreciate that a number of coatings could be employed - for example chocolate, gum, candy and sugar etc.

The body portion may be connected to one or more further confectionery portions. In some embodiments, the body portion is sandwiched between confectionery materials or may be connected or laminated to one or more confectionery layers. The further confectionery portion or portions may or may not contain inclusions, liquid-filled beads etc.

In some embodiments, the capillaries are distributed substantially uniformly throughout the body portion, and may be spaced evenly apart from adjacent capillaries. In other embodiments, the capillaries may be distributed in predefined configurations within the body portion, such as around the periphery of the body portion, or in groups at one or more locations within the body. In some embodiments the body portion has a circular, elliptical, regular polygonal or semicircular cross-section. The body portion may be shaped in the form of a cylinder, a rope, a filament, a strip, a ribbon or the like, or may be shaped in the form of a standard confectionery product such a chocolate bar, or chewing gum slab, pellet, ball, stick or ribbon, for example. The body portion may be irregular or regular in shape. Furthermore, the body portion may be formed in potentially any shape, for example in the shape of an object, cartoon character or an animal to name a few.

Two or more capillaries may have different widths or diameters. Such an arrangement will allow, if desired, for different quantities of different fill materials to be incorporated into different capillaries. Furthermore, the two or more capillaries may have different cross-sectional profiles. For example, the confectionery product may have capillaries having a cross-sectional shapes including stars and triangles, or different shapes of animals etc.

In an embodiment, the capillaries in the body portion result in a voidage in the range of 1 - 99% of the extrudate, or 5 - 99% of the extrudate. The voidage may be in the range of 10 - 60%, 20 - 50%, 30 - 45%, or 35 - 40%. The voidage may also be in intermediate points in these ranges, for example, 5 - 40%, 5 - 45%, 5 - 50%, 5 - 60%, 10 - 40%, 10 - 45%, 10 - 50%, 10 - 99%, 20 - 60%, 20 - 45%, 20 - 40%, 20 - 60%, 20 - 99%, 30 - 40 %, 30 - 50%, 30 - 60 % or 30 - 99%. The voidage may be over 5%, 10%, 15%, 20%, 25%, 30%, 35%, 40%, 45%, 50%, 55%, 60%, 65%, 70%, 75%, 80%, 85%, 90% or 95%.

The incorporation of capillaries of a small cross-sectional width or diameter enables the capillaries to entrain contrasting or complementary confectionery materials into the body portion whilst avoiding the need to incorporate large centre-fill areas which may be prone to leakage through, or out of, the confectionery product. The use of a plurality of capillaries also enables two or more materials to be incorporated into the confectionery product to give multiple textures, tastes, colours and/or mouth-feel sensations, throughout the whole confectionery product.

In some embodiments, the capillaries have an average diameter or width of no more than, 3mm, 2mm, 1mm, 0.5mm, 0.25mm or less. It is possible to have capillaries having a diameter or width of no more than 100µm , 50µm or 10µm. The capillaries may have different widths or diameters if desired.

In another embodiment of the present invention, there is provided a confectionery product comprising a first extruded portion and a second extruded portion, wherein each portion has a plurality of capillaries disposed therein, and the capillaries of the first and second portions are:
a) discontinuous; and/or
b) continuous and oriented in more than one direction.

There may be further portions in addition to the first and second portions, which may or may not comprise capillaries. In one embodiment, the confectionery product comprises the first portion separated from the second portion by one or more further portions that may or may not contain capillaries.

The first and second portions may be as described hereinabove for the body portion. The first and second portions may comprise the same material or different materials. For example, the first portion may be chocolate and the second portion candy. The capillaries in each of the first and second portions may be filled with the same or different materials. One or more capillaries in the first and/or second portions may be filled with different material(s) to other capillaries in the first and/or second portion.

According to a further embodiment of the invention, there is provided a confectionery product comprising an extruded body portion having a plurality of capillaries disposed therein, wherein each capillary is separated from each adjacent capillary by a wall formed from the extruded body portion and wherein the wall between each capillary has a thickness of no more than the width or diameter of the capillaries.

According to a further embodiment, there is provided a process for manufacturing a confectionery product comprising a body portion, having a plurality of capillaries disposed therein, the process comprising the steps of:
a) extruding an extrudable confectionery material with a plurality of capillaries disposed therein; and
b) at least partially filling one or more capillaries with a fill material which is a different material from that of the extruded body portion, the fill material comprising an active and/or reactive component and wherein two or more different active/reactive components are provided in the same or different capillaries.

In some embodiments, the method may include an extra step selected from:
c) cutting the extrudate into two or more pieces having a plurality of capillaries disposed therein and forming a confectionery product incorporating the pieces; and/or
d) folding the extrudate and forming a confectionery product incorporating the folded extrudate.

According to a further embodiment, there is provided a process for manufacturing a confectionery product comprising a body portion, having a plurality of capillaries disposed therein, the process comprising the steps of:
a) extruding an extrudable confectionery material with a plurality of capillaries disposed therein; and
b) cutting the extrudate into two or more pieces having a plurality of capillaries disposed therein and forming a confectionery product incorporating the pieces; or
c) folding the extrudate and forming a confectionery product incorporating the folded extrudate

The deposition of the filling may be during the step of extrusion - but could also take place after extrusion. In an embodiment, the filling comprises a fluid. The fluid may comprises a liquid, or a material which is liquid at a temperature greater than room temperature. The fluid may solidify after deposition is desired.

The two or more capillaries may be at least partially filled with different active and/or reactive materials. The active and/or reactive component may be encapsulated. The active and/or reactive component may comprise an effervescent material. The fill material may comprise particulate material. The fill material may comprises any number of materials as described herein above with reference to the product itself.

The extrudable material will preferably be liquid during extrusion.

Any of the processes may further comprise the step of quench cooling the extrudate after extrusion. The quench cooling may utilise a fluid, such as air, an oil or liquid nitrogen - but other methods of quench cooling will also be apparent to the skilled addressee.

Any of the processes may further comprise the step of, after extrusion, stretching the extrudate. Stretching the extrudate may be undertaken by a number of means, for example passing the extrudate over, or through conveyor belts or rollers operating at different speeds, so as to stretch the extrudate. By employing this additional step, extrusions having capillaries of a larger diameter can be produced, which can be reduced in diameter gradually over time so as to produce an extrudate with smaller capillaries which would have been more difficult to initially. Commonly, capillaries having a bore size of 2mm or more will be produced during extrusion and these capillaries will be reduced significantly by stretching the extrudate. In some embodiments the capillaries are reduced to no more than 1mm, 0.5mm, 0.25mm, 100µm, 50µm, 25µm or 10 µm.

The extrudable confectionery material will at least partially or substantially solidify after extrusion.

If desired, two or more capillaries may be formed having different widths or diameters. Furthermore, two or more of the capillaries may be formed having different cross-sectional profiles.

Any of the processes may further comprise the step of enveloping the confectionery product in a coating. Such a coating will be apparent to the skilled addressee and discussed previously.

The processes may be used for producing a confectionery material as herein above described.

A further embodiment of the present invention provides for apparatus which is adapted for producing a confectionery product according to the processes as herein above described. WO2005056272 discloses an apparatus for producing an extrudated product including a plurality of capillary channels. WO2008044122 discloses a related apparatus, which additionally includes means for quench cooling an extrudate as it exits the die. Both of these apparatus may be employed/adapted for use in producing the confectionery in accordance with the present invention.

### Detailed Description of the Invention

Specific embodiments of the present invention will now be described, by way of example only, with reference to the accompanying drawings, in which:
Figure 1 is a schematic diagram illustrating the overall apparatus used for the experiments described in Examples 1 and 2, in accordance with the present invention;
Figure 2 is a schematic diagram illustrating the apparatus which can be used in conjunction with the apparatus shown in Figure 1, so as to provide a liquid filled capillaries;
Figure 3 is a photograph of the extrusion die used to form capillaries in the extruded material of Examples 1 and 2;
Figure 4 is a plan view of the extrusion die which incorporates the extrusion die shown in Figure 3 in the apparatus as illustrated in Figures 1 and 2;
Figure 5 shows photographs of four capillary extrudates formed from material 1 in Example 1, the photographs show: (A) low voidage, (B) and (C) high voidage and (D) very high voidage;
Figure 6 shows photographs comparing capillary extrudates formed from (A) material 2 containing completely filled cocoa butter capillaries and (B) material 1 formed with air filled capillaries;
Figure 7 shows a photograph of the external part of the extrusion apparatus as illustrated in Figures 1 and 2, showing the air knives used to cool the extrudate when it exist the die;
Figure 8 shows a hard candy with an air fill produced in Example 2, in accordance with the present invention;
Figure 9 shows a hard candy with a liquid fill produced in Example 2, in accordance with the present invention;
Figure 10 shows a gum with an air fill, produced in Example 2, in accordance with the present invention;
Figure 11 shows a gum with a liquid fill, produced in Example 2, in accordance with the present invention;
Figure 12 shows a gum with a solid fill, produced in Example 2, in accordance with the present invention;
Figure 13 shows a chocolate with an air fill, produced in Example 2, in accordance with the present invention;
Figure 14 shows a chocolate with an air fill as shown in Figure 13, but in longitudinal cross section;
Figure 15A shows a perspective view of an extrudate formed in accordance with the present invention, where the extrudate has been folded;
Figure 15B shows a cross-sectional view of the extrudate as shown in Figure 15A, viewed from the line denoted "X";
Figure 16 shows a perspective view of an extrudate formed in accordance with the present invention, where a number of extrudated layers have been stacked upon one another;
Figure 17 shows a cross-sectional view of an embodiment of a confectionery product in accordance with the present invention, where the product has two capillaries, each of which containing a different fill material;
Figure 18 shows a cross-sectional view of an embodiment of a confectionery product in accordance with the present invention, where the product has a plurality of capillaries positioned around the periphery of the product containing a first fill material, and a second centrally located capillary containing a second fill material;
Figure 19 shows a cross-sectional view of an embodiment of a confectionery product in accordance with the present invention, where the product has a plurality of capillaries positioned throughout the product and the capillaries contain one of two fill materials; and
Figure 20 shows a cross-sectional view of an embodiment of a confectionery product in accordance with the present invention, where discrete groups of four capillaries are formed around the periphery of the product.

Experiments were conducted to produce a variety of confectionery products incorporating capillaries. Three phases of extrusion work were undertaken using various materials. The first phase concerned the extrusion of hard candy using a capillary die attached to a small-scale extruder in a non-food grade environment for creating capillary candy extrudates in both low- and high-voidage forms. The second phase of the experimental work built upon the first phase to produce low and high voidage candy capillary extrudates containing an array of cocoa-butter filled capillaries. The first and second phases are described below in Example 1. The third phase built upon the first two and recreated the working environment with food grade equipment in a food grade environment and is described below in Example 2.

### Example 1

Phase one concerned the extrusion of candy using a capillary die attached to a small-scale extruder, in order to confirm that candy having capillaries with both low and high voidage values could be formed in accordance with the present invention.

The materials that were trialled during this investigation are shown in Table 1.

**Table 1. Materials tested.**

| **Material number** | **Material name** | **Majority ingredients** | **Application** |
|---|---|---|---|
| 1 | Custom recipe 1 | Sugar (40%) Glucose Syrup (60%) | Extruded matrix |
| 2 | Custom recipe 2 | Maltitol syrup (96%) Gum Arabic (2%) Water (2%) | Extruded matrix |
| 3 | Cocoa butter | Cocoa butter (100%) | Capillary filler |

Materials 1 and 2 were supplied as large solid blocks. All materials were crushed prior to extrusion to yield a fine granular powder, with grain sizes ranging between 1 mm and 5 mm. Material 3 was supplied as a tub of solidified cocoa butter; the required quantity was broken up into a fine powder containing only small lumps before being fed into the heated cocoa butter reservoir.

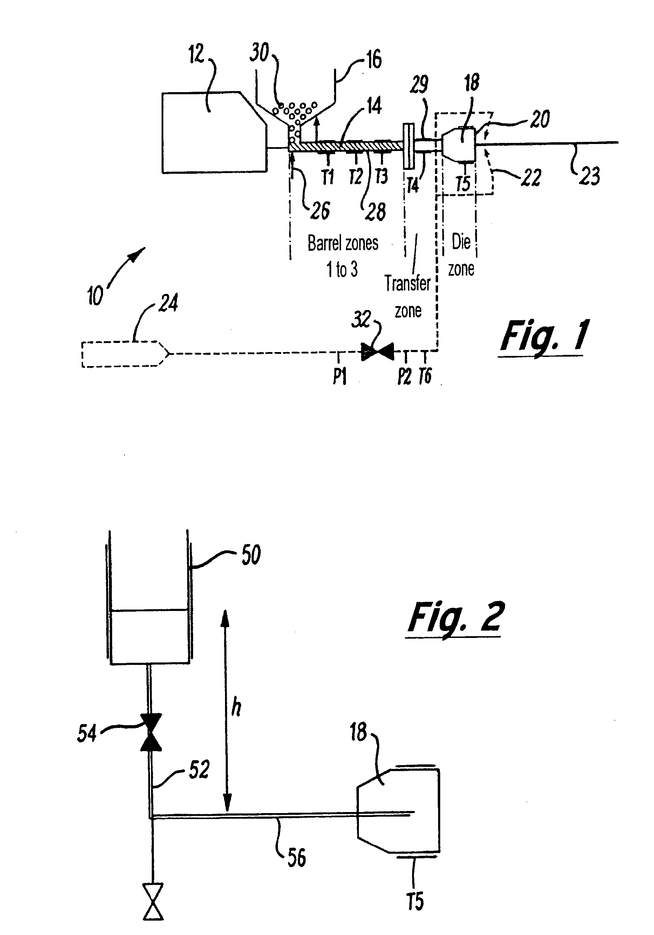

The extrusion equipment consisted of a Betol single screw extruder, with a screw diameter of approximately 12 mm, and a screw L/D ratio of roughly 22.5:1. The extruder had four different temperature zones (denoted T1-T4 in figure 1 as described later), each of which could be independently controlled using PID controllers connected to band heaters. The Mk 3 MCF extrusion die, containing an entrainment array consisting of 17 hypodermic needles, was connected on the extruder endplate. Two opposed air jets, used to rapidly quench the extrudate emerging from the extrusion die, were placed above and below the die exit; these jets were connected via a valve to a compressed air line at 6 Barg. A schematic diagram showing the general layout of the extrusion line is shown in Figure 1 and a schematic drawing of the capillary die is shown in Figure 2.

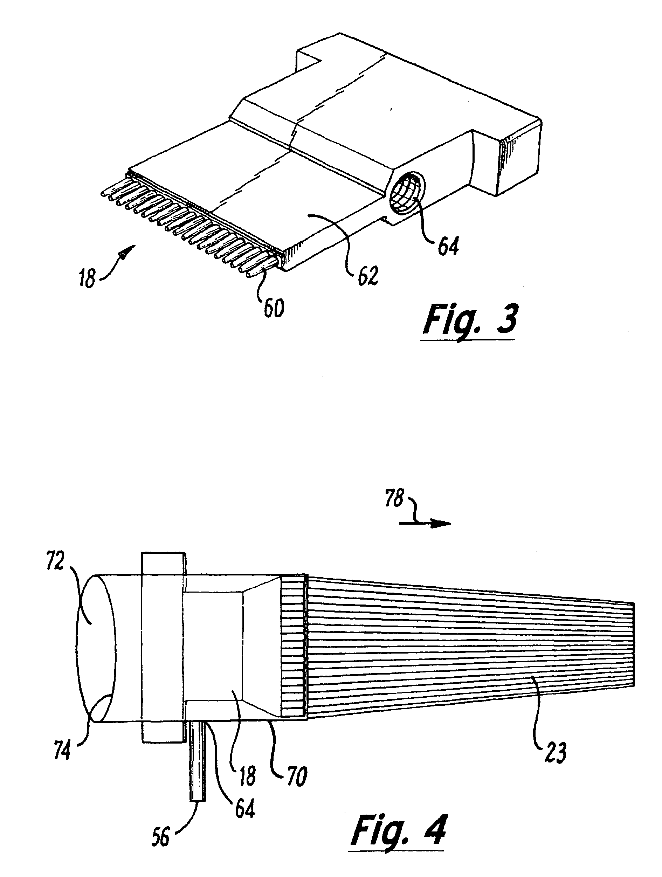

With reference to Figure 1, there is shown a schematic diagram of the extrusion apparatus 10 used in the experiments. The apparatus briefly comprises an electric motor 12 which is rotatably coupled to an extrusion screw 14. The screw 14 is fed at one end by a hopper 16 and the opposing end is coupled to an extrusion die 18 having an extrudate outlet 20. Quench jets 22 are directed towards the die outlet 20 so as to cool the extruded material 23 which is produced and these jets are fed with compressed air 24. If desired, the area of the apparatus where the hopper 16 is coupled to the screw 14 can be cooled by means of a cooling feed 26. Surrounding the screw 14 is a barrel 28 which is formed having three barrel temperature zones denoted T1 to T3 - the temperatures of each zone being capable of being controlled. The barrel 28 is connected to the die 18 by means of a feed conduit 29 which also has a temperature zone T4 which can be controlled. In use, the hopper 16 is filled with material 30 (such as candy in solution) which can be heated so as to render it (or maintain it as) a liquid (not solid or solid particulate). Before the material passes into the screw 14, it can be cooled by means of the cool feed 26, so as to ensure that the material is at the correct temperature for entering the screw extruder. As the screw is rotated, the liquid material is drawn along the screw 14, inside the barrel 28 and the temperature of the zones T1-T3 adjusted accordingly. The material then passes through the feed conduit 29 and the temperature adjusted again (if required) by temperature control T4 before entering the die 18. The die 18 (shown in Figure 3) has a number of needles (not shown) located within an entrainment body so that the material passes over and around the needles. At the same time that the material is being extruded, compressed air 24 is forced through the needles so that the extrudate contains a number of capillaries. The extrudate 23 is cooled by means of the quench jets 22 as it is released from the die 18. A valve 32 controls the flow of compressed air to the apparatus and pressure devices P1 and P2 control the pressure of the compressed air 24 before and after the valve. The compressed air line also has a temperature control T6 so as to control the temperature of the air before entering the die.

With reference to Figure 2, there is shown an adaptation of the apparatus shown in Figure 1. Rather than compressed air 24 being forced through needles, the needles are connected to a reservoir 50 containing cocoa butter. The reservoir 50 is heated so that the cocoa butter is maintained at the correct temperature so as to maintain it in a liquid state. The reservoir 50 is connected to a conduit 52 having an isolation valve 54 for controlling the flow of liquid. The conduit 52 is encased in a trace heating tube 56 which maintains the temperature of the conduit so that the liquid remains in a liquid state during its movement within the conduit. The conduit 52 is coupled to the inlet to the die 18 having number of needles, so that when the material is being extruded, the capillaries formed around and the needles can be simultaneously filled with cocoa butter. Of course, the capillaries could be filled with other types of liquid material if desired.

Figure 3 shows the die 18 in more detail. In particular, this figure shows that the metallic die 18 has, at one end, a plurality of needles 60 which are joined to a cavity 62 which is in fluid communication with an inlet channel 64 for pumping a fluid material into the capillaries of the extrusion.

With reference to Figure 4, there is shown the die 18 in place in an entrainment body 70. Molten material 72 enters an opening 74 of the entrainment body 70 and the material is forced over and around the needles 60 of the die 18. At the same time, either air or liquid cocoa butter enters the die inlet by means of a fluid feed conduit 56. When operational, the molten material is extruded through the entrainment body 70 over the needles 60 of the die 18. Either air or cocoa butter is then pumped through the needles at the same time so as to produce an extrudate 23 (in direction 78) which either has capillaries with no filling or capillaries filled with cocoa butter.

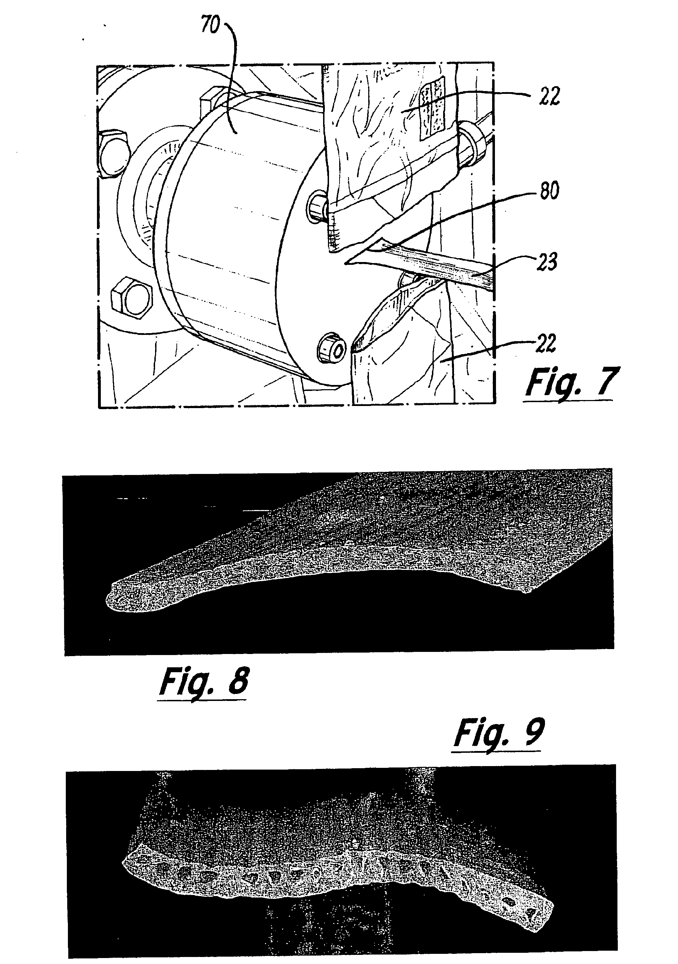

Figure 7 shows the entrainment body 70 having an opening 80, through which the extrudate is formed. This figure also shows two quench jets 22 located above and below the aperture so as to cool down the extrudate after is has been produced.

In use, the flow of molten material over the tips of the entrainment nozzles (hypodermic needles) caused a small area of low pressure to form at each needle tip. Each nozzle was connected together via internal channelling within the entrainment body. These, in turn, were connected outside the extrusion die to either air at room temperature and pressure or to a molten cocoa butter reservoir, with a hydraulic head of h in Figure 2. The pipework connecting the die to the cocoa butter reservoir and the cocoa butter reservoir was externally heated to maintain the cocoa butter in the liquid phase. A set of isolation valves were used to switch between either using an air feed to the entrainment body or a molten cocoa butter feed. This is shown schematically in Figure 2.

The quench jets were used for the generation of the high-voidage material. Differential scanning calorimetry (DSC) was used to examine the thermal behaviour of the materials, such that information relating to the phase transition temperatures could be obtained.

Material 1 was formed in a large solid block. The block was broken up mechanically, such that it became a granulated material with granule sizes between 1 mm and 5 mm.

The extrusion temperature profile was set to that shown in below Table 2.

**Table 2. Extruder temperature profile for material 1.**

| **Temperature zone** | **Label on** **Figure 1** |
|---|---|
| Barrel zone 1 | T1 |
| Barrel zone 2 | T2 |
| Barrel zone 3 | T3 |
| Die zone 1 | T4 |
| Die | T5 |

Granulated pieces of material 1 were starve-fed into the extruder, with the extruder screw-speed set to 40 rpm. The granules of material 2 conveyed well into the extruder in the solid phase initially, but due to the sticky nature of the material, some mild feed zone bridging and blocking was observed. This was overcome by gently pushing the broken-up material onto the extruder screw with a polyethylene rod.

Successful capillary extrudates were easily achievable using this protocol. The material had good melt strength and was pulled away easily from the die in the molten state before it set into a brittle, glassy, material. The glassy state of the material meant that it was unsuitable for use in a pair of nip rolls since the compression experienced by the material in this apparatus caused fracture. Consequently, the capillary extrudates from material 1 were hand drawn, the capillaries having an average diameter (width) of less than 4mm.

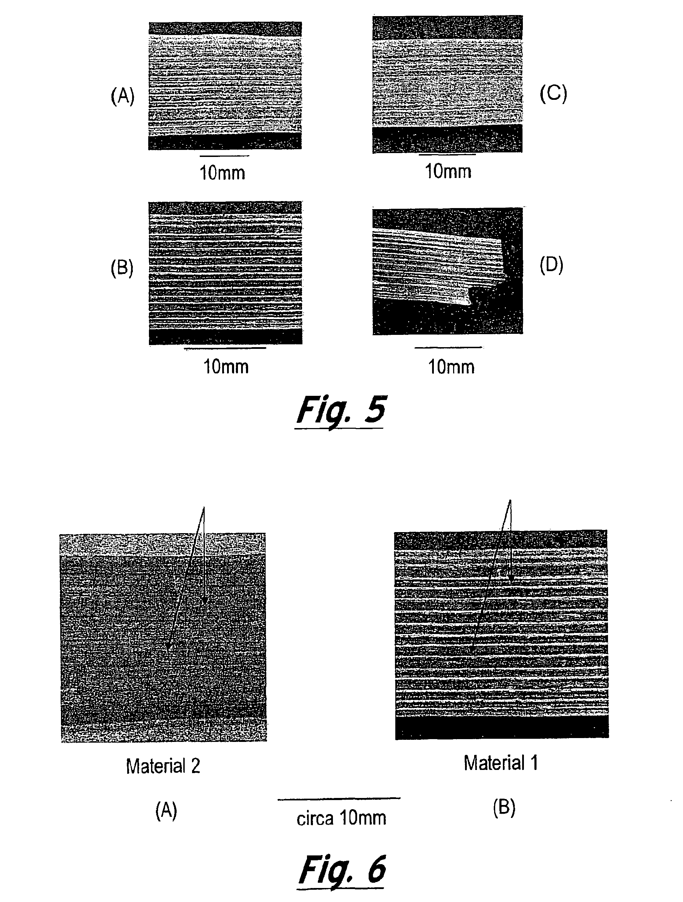

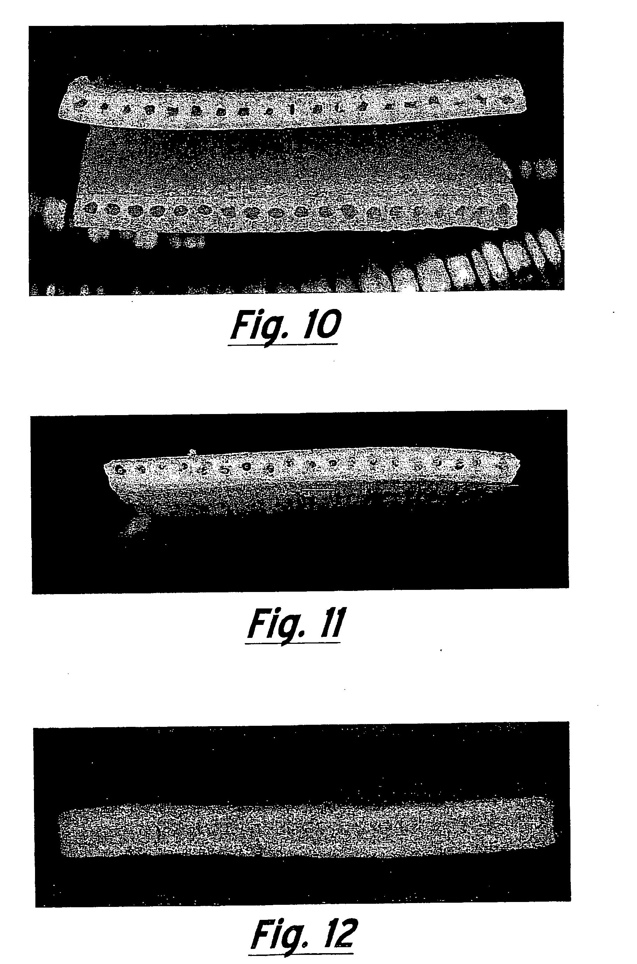

Low voidage MCF from material 1 was easily obtained without quenching the extrudate using the quench jets; this is illustrated in the photograph in Figure 5(A). Enhanced manual hauling of the extrudate away from the die exit coupled with use of the quench jets resulted in high voidage capillary being extruded. The ultimate voidage depended on the speed at which material is hauled away from the die; various different forms of high voidage capillary extrudate formed from material 1 are shown in Figure 5(B), (C) and (D). Crude optical analysis of the cross section of material similar to those shown in Figure 10(B) and (C) revealed that voidage between 35% and 40% had been generated. It is highly likely that the high voidage material shown in Figure 10(D) was in excess of the value of 35% o 40%.

The second phase of the of extrusion experiments were conducted with material 1 using cocoa butter heated to between 35°C and 40°C. The head, h, of the cocoa butter reservoir was initially set to 8 cm, and material two fed into the extruder as described earlier. The initial proof of concept was successful, and resulted in the partial filling of the capillaries with molten cocoa butter. It was observed, however, that due to the increased viscosity of the cocoa butter compared to air, the rate at which cocoa butter could be entrained into the extrudate was slow. This problem appeared to be solved by increasing the head of the reservoir to 21.5 cm. It was also observed qualitatively that, in low voidage form, the cocoa-butter filled capillaries appeared somewhat smaller than their air-filled counterparts (less than 3mm compared to less than 4mm). It was also possible to create high-voidage cocoa-butter filled capillary extrudates, subject to the coca-butter head being high enough to supply molten cocoa butter at the increased rate.

Material 1 was successfully formed into capillary extrudates, of both high and low voidage, with either airfilled capillaries or cocoa butter-filled capillaries. Varying different voidages films were made, and it was observed that increasing levels of voidage led to increasing fragility. A representative figure for one of the high voidage air-cored films was between 35% and 40% and it is estimated that the very high voidage, highly fragile films, exceeded this.

Material 2 was formed from a mixture of 96% maltitol syrup, 2% gum Arabic, 2% water. Material 2 was shown to act in a similar manner to material 1, in that it was supplied in a large block that was required to be broken up mechanically into smaller granules before it could be fed into the extrusion line. Prior to extrusion experiments commencing, the extrusion die was disassembled and washed and the extruder was fed a hot water wash to dissolve any material 1 remaining within the extruder barrels or on the screw. After the water was purged from the extruder, the extruder was heated to 130°C for between five and ten minutes to evaporate any remaining water. An early scoping experiment revealed that material 2 required higher extrusion temperatures than material 1; the final extrusion line temperature profile is shown in Table 3 below.

**Table 3. Extruder temperature profile for material 2.**

| **Temperature zone** | **Label on** **Figure 1** | **Temperature (°C)** |
|---|---|---|
| Barrel zone 1 | T1 | 115 |
| Barrel zone 2 | T2 | 115 |
| Barrel zone 3 | T3 | 115 |
| Die zone 1 | T4 | 115 |
| Die | T5 | 120 |

As with material 1, material 2 was starve-fed into the extruder. As with material 1, the screw speed was set to 40 rpm. Material 2 proved to be easy to extrude and capillary extrudates with air-filled capillaries were produced in both low and high voidage forms. Material 2 exhibited good melt strength, good drawing characteristics prior to solidifying and became brittle and glassy upon solidification. Again, this precluded the use of nip rollers to draw the material from the die and control the amount of draw down achieved, hence manual drawing was used in a similar way to material 1. In terms of restarting the extrusion line after an idle period, material 2 did not prove to be noticeably different to material 1, and the line restarted relatively easily. Due to the ease with which capillary extrudates were achieved, phase one was concluded relatively quickly to allow progression to phase two.

Phase two experiments were conducted with material 2 using cocoa butter heated to between 35°C and 40°C. The head, h, of the cocoa butter reservoir was kept at 21.5cm, and material 2 starve-fed into the extruder as described in the previous section. Successful extrusion of both low- and high-voidage micro capillary extrudate from material 2 containing completely filled cocoa-butter capillaries was achieved. A photograph comparing the cocoa-butter filled capillaries of material 2 to the air filled capillaries of material 1 is shown in Figure 6. Crude optical analysis of a cross section of a piece ofhigh-voidage material 2 revealed that the voidage was roughly 35% at minimum. It is likely this figure can be easily increased through optimisation of the protocol.

The observations for material 2 are similar to those from material 1. Low- and high-voidage capillary extrudates were formed, either containing cocoa-butter capillaries or air-filled capillaries. Crude optical analysis of a moderately high-voidage extrudate revealed that the void fraction was approximately 35%. Although, it is thought that the actual figure may have been higher. Increasing product voidage again led to increasing product fragility due to the capillary walls becoming very thin.

The objective of these first and second phase experiments were to provide proof-of-concept for the extrusion of capillary extridates from various candy materials. This was successful with both materials (material 1 = 40% sugar and 60% glucose, and material 2 = 96% maltitol syrup, 2% gum Arabic and 2% water). Low- and high-voidage capillary extrudates were formed containing both air-filled capillaries and cocoa-butter filled capillaries. It was estimated that a typical high-voidage extrudate contained roughly 35% to 40% voidage whether it was air filled or cocoa-butter filled.

### Example 2

The third phase built upon the first two phases described in Example 1 and recreated the working environment with food grade equipment in a food grade environment. This food-grade setup extruded hard candy, chocolate and chewing gum with air, liquid and solid centres. This range of filled extrudates were made in a food grade environment and were consumed to investigate their edible properties.

The following edible materials were used in these experiments:

Chewing gum (uncoated Peppermint-Spearmint Higher flavour chewing gum pellets); hard candy, mint candy (Extra Strong Mints®, Jakemans® Old Favourites), fruit candy (Summer Fruits, Jakemans® Old Favourites), chocolate (milk chocolate (with 0, ½,1, 2% added water), Cadbury® Dairy Milk® Buttons - when used molten, 2% PGPR was added to lower the melt viscosity for ease of use (c.f. legal limit of ½%)), compound chocolate (Plain Belgian Chocolate, SuperCook®), 72% Cook's Chocolate, Green & Black's®. Liquid fillings used in these experiments included: monopropylene glycol (Propane-1,2-diol, BP, EP, USP, Fisher scientific® - selected for low viscosity, zero moisture, low flavour, and BP, EP & USP grade for oral use), Golden Syrup (partially inverted refiners syrup - Tate & Lyle® - selected for higher viscosity, food grade, shelf stability, and sweet flavour), Red Food Colouring (SuperCook®, UK), Blue Food Colouring (SuperCook®, UK). Lastly, a solid filling of cocoa butter obtained internally from a Cadbury Plc. site was also used in these experiments and this was selected because it is solid at room temperature and has low hot viscosity.

A Davis-Standard HPE-075 ¾" 24:1 single-screw extruder was used in these experiments. The extruder also included air-knives and a header tank. The screw was a simple conveying-compression-pumping all forward element design, with no mixing or reversing sections. The motor was 3KW, geared to produce 0-100rpm screw rotation. The feed throat was jacketed and supplied with flowing ambient water to prevent heat transfer from the barrel causing feed problems with sticky feedstuff. The barrel had three heating zones, each with a 1 KW heater and forced ambient air cooler. The standard extruder has a Eurotherm 3216 controller per barrel zone and one spare for the die (die controller connected to thermocouple input and standard 16A 240v socket for up to 1KW heater output).

At point of purchase, two additional die controllers, thermocouple inputs and heater outputs were specified to enable integrated control of the header tank containing filling material and the pipework connecting that header tank to the die. The die was an assembly of parts comprising a body with main die orifice of long thin rectangular shape, through which 19 interconnected nozzles (similar in size to hypodermic needles) also exited. The main body was heated and the nozzles led to an external fitting that could be opened to ambient air or could be connected to the heated, pressurized header tank. A bobbin shaped flange was constructed to mount the die assembly onto the extruder end flange.

The die was heated with 4x 100W ¼" cartridge heaters, and monitored by a K-type thermocouple probe. Initially these were controlled by a Eurotherm 3216 in a bespoke enclosure until the control and power wiring was transferred to a Eurotherm integrated into the extruder. The die assembly was earthed into the power outlet from the extruder.

The header-tank and the pipework connecting the header tank to the die were heated with two 100W ribbon heaters initially controlled from a single analogue controller in a bespoke enclosure, and monitored by a single bare K-type thermocouple. These were later separated to two Eurotherm 3216s integrated into the extruder with two thermocouples and two power supplies. The header tank was earthed to the power outlet, whilst the pipework was plastic and did not need to be earthed.

Compressed air, BOC®, UK was regulated with series 8000 gas regulator and pressures used were 0-10bar. The main use for the compressed air was to supply the air-knives.

Food Safe High-Tech Grease, and Food Safe Penetrating Oil from Solent Lubricants, Leicester, UK was used.

The capillary die was connected on the extruder endplate. Two opposed air knives were used to rapidly quench the extrudate emerging from the extrusion die, were placed above and below the die exit; these jets were connected via a valve to a compressed air line at 10 bar pressure. A schematic diagram showing the general layout of the extrusion line is shown in Figure 1.

In use, the flow of molten material over the tips of the entrainment nozzles (hypodermic needles) caused a small area of low pressure to form at each needle tip. Each nozzle was connected together via internal channelling within the entrainment body. This, in turn, was connected outside the extrusion die to either air at room temperature and pressure or to a header tank containing a liquid that was at ambient or elevated temperature and pressure, with a hydraulic head of h. The header tank and the pipework connecting to the die were externally heated. A set of isolation valves were used to switch between either using an air feed to the entrainment body or a molten cocoa butter feed. This is shown schematically in Figure 2.

The quench jets were used for the generation of the high-voidage material. It had been found during previous research-that if the emerging extrudate was quenched very rapidly and subjected to a high drawing force, a higher voidage cross section could be obtained. Adjustment of the polymer and process conditions yielded voidages up to, and possibly in excess of, 60%.

Hard candy was pre-broken before introduction to the extruder. Particle size was not important - the extruder was found to take whole candies or dust. It was found that broken candies fed more evenly than whole pieces. All barrels and the die were set to 95°C for fruit candy. Mint candy had tolerance to a wide range of temperatures and could run with barrels and die at 95° - 110°C.

Screw speeds of 15-100rpm were used in the experiments. Differences in product were minimal (except rate of production). Continuous, complete, transparent films with well formed capillaries could be produced optimisation of the protocol. The films could be filled and/or drawn without leaking. Product morphology was found to change with drawing speed and rate of cooling inline. Fast drawing with no cooling could thin the films to 1mm wide with microscopic width and capillaries. Drawing with heavy cooling enlarged the voidage in the films.

In another test, uncoated gum pellets were reduced in size to approximately 3mm to aid feeding into the extruder. This was done with freezing and a domestic food processor. Barrel and die temperatures of 58°C resulted in the most contiguous product. This product had sufficient integrity to be filled with few leaks. It is likely that using gum base, in particular molten gum base, rather than whole gum would produce films with even greater integrity.

In a further test, chocolate was used as material for extrusion. To gain stable running conditions, the heaters and cooling fans of the extruder were electrically disabled. Direct temperature control was abandoned in favour of relying on the air conditioning of the laboratory. With these modifications the extruder barrel indicated an even 22°C and it was simple to extrude capillary chocolate in a steady state using molten tempered Cadbury's Dairy Milk® chocolate.

As with hard candy extrusion, it was possible to draw the chocolate extrudate so as to alter the cross sectional geometry, and produce capillaries having diameters or widths of between 0.5mm and 4mm.

Air filling was achieved through a simple ambient air-bleed to the nozzles in the die and a cross section of the extrudate is shown in Figure 8.

Monopropylene glycol filling was achieved at ambient temperature and pressure, with approximately 5cm liquid depth in the header tank which was in turn approximately 10cm higher than the die. Colour was added directly into the header tank as and when required.

Golden Syrup filling was achieved by heating the header tank and pipework to 78°C to fill hard candy, and 58°C to fill gum. Pressurisation of the header tank was required at the lower temperature to generate syrup flow. Again, colour was added directly into the header tank as and when required.

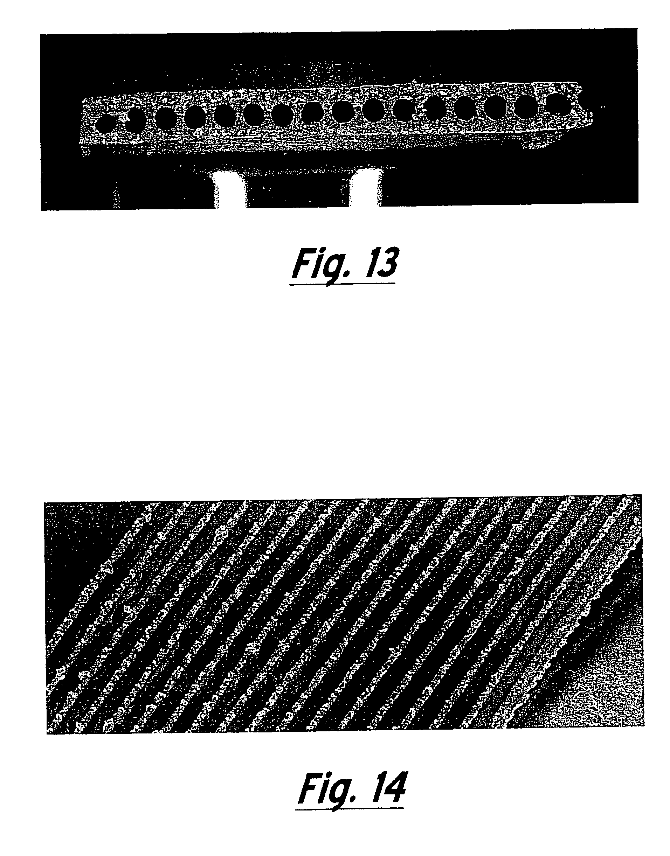

Figures 8-14 shows photographs of extrusions formed in the third phase of experiments. Figure 8 shows a hard candy with an air fill. Figure 9 shows a hard candy with a liquid fill. Figure 9 shows a gum with an air fill. Figure 10 shows a gum with a liquid fill. Figure 11 shows a chocolate with an air fill. Figure 12 shows a chocolate with an air fill as shown in Figure 11, but in longitudinal cross section.

Confectionery products and methods of the invention have been shown for chocolate, hard candy and gum. The experiments of the third phase had shown a range of food materials that can also be used. It could therefore be deduced that any product normally solid at room temperature yet extrudable at elevated temperature and pressure could be formed into a capillary product such as chewy, gummy or jelly candies, for example. Products that show high extensional viscosity when warm may be drawn to alter their geometry and their outer to inner ratio.

It has also been shown that air, liquid and solid centres can be incorporated into capillary extrusions, providing the solid centre can be liquefied and is flowable.

It will be apparent to the skilled addressee that the capillary extrudate produced in the examples could be employed in confectionery in a number of ways. For example, a chocolate extrudate having capillaries filled with air could be used to manufacture a chocolate bar having a similar size to a regular bar, but lower in fat and sugar - as it contains less material. Alternatively, a chocolate extrudate could have capillaries filled with a liquid chocolate filling so as to provide an enhanced sensory pleasure. A further example may be a milk chocolate extrudate having capillaries filled with a dark chocolate filling, so as to produce a different flavour profile.

The extrudates of the present invention could be configured in a number of ways. For example, Figure s 15A and 15B show an extrudate 100 having centre filled capillaries 102, where the extrudate is folded back on it self several times. Such a configuration would enable an extended release of centre fill during chewing. A chocolate éclair could be formed having a chewy centre having liquid filled capillaries - where the chewy centre was a folded several times so as to enable the liquid fill to be released over an extended period.

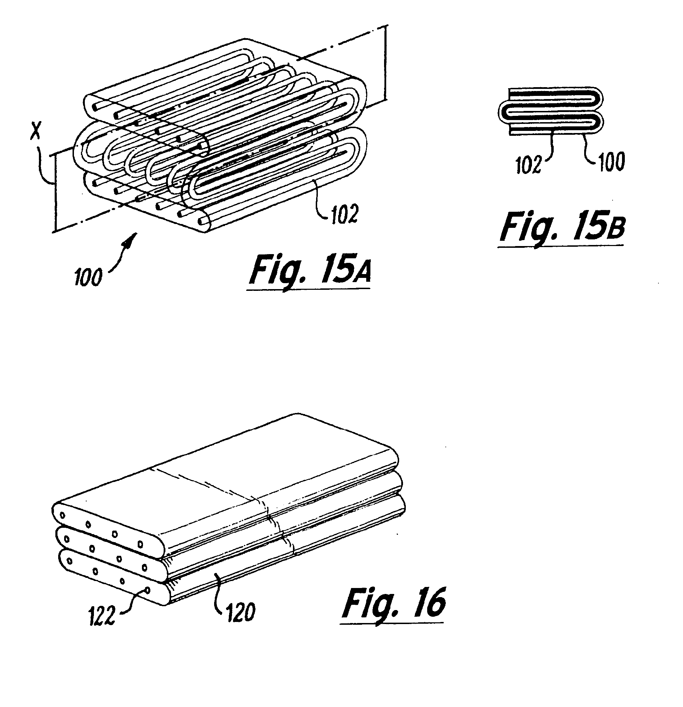

Figure 16, shows multiple layers of extrudate 120 being stacked on top of one another and each stack having a plurality of capillaries 122 with a centre filling. Such an arrangement could also be employed in a chewy confectionery.

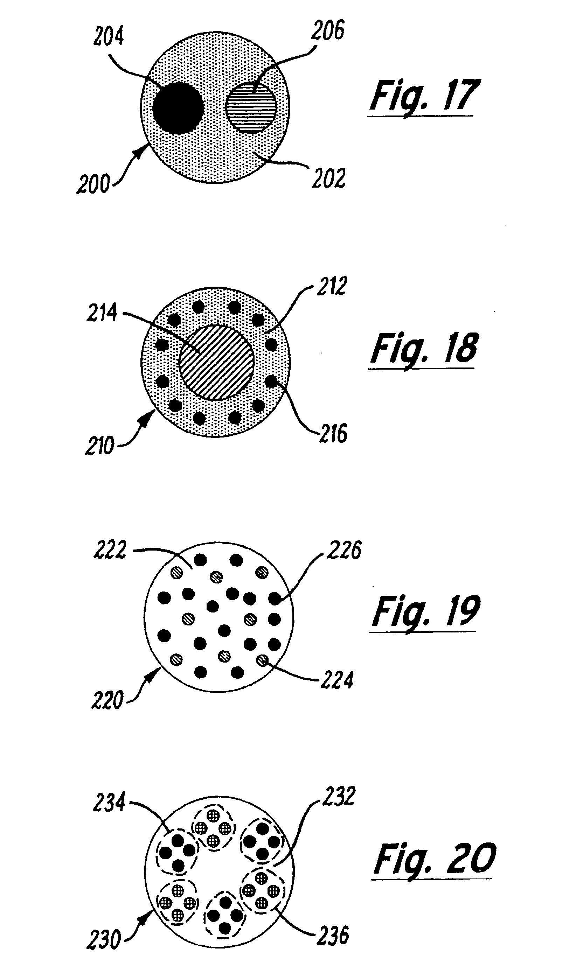

Figures 17-20 illustrate a small number of confectionery products which can be made according to the present invention.

Figure 17 shows a cylindrical confectionery product 200 having a circular cross-section. The confectionery product 200 incorporates an effervescing system so as to produce an enhanced sensory experience when it is consumed. The product is generally formed from an extruded soft candy material 202 which incorporates a first capillary 204 and a second capillary 206. The first capillary 204 contains a citric acid component, whereas the second capillary contains a bicarbonate component. When the product is consumed, the act of chewing mixes the citric acid component and the bicarbonate component together and both components react together so as to effervesce in the mouth.

Figure 18 shows a cylindrical confectionery product 210 having a circular cross-section. The confectionery product 210 is a throat sweet and is generally formed from an extruded hard candy material 212. In a central portion of the product, there is provided a large capillary 214, surrounding which are a number of smaller, uniformly spaced capillaries 216 extending around the periphery of the product. The large capillary 214 contains a throat soothing component such as a mixture of honey and menthol, whilst the smaller capillaries 216 contain expectorants (such as ammonium chloride) and nasal decongestant (such as phenylpropanolamine). The candy material additionally contains other components used in throat sweets, such as anti-inflammatory agents. When the confectionery product is consumed, the hard candy 212 slowly degrades, which releases the anti-inflammatory agents so as to help reduce swelling in the mouth and throat. As the candy 212 degrades, the contents of the smaller capillaries 216 become exposed and the expectorant and decongestant are released into the mouth, which help to expel mucus and reduce the swelling of the nasal membranes. Lastly, further degradation of the candy 212 will lead to the release of the throat soothing component contained in the large central capillary 214 so as to further sooth the throat.

Figure 19 shows a cylindrical confectionery product 220 having a circular cross section. The confectionery product is a combination breath-freshening and tooth-whitening gum. The product is formed of an extruded gum material 222 and has a number of uniformly spaced capillaries extend throughout its interior. The capillaries are filled with either a first material 224 (denoted in the Figure by means of a shaded dot) or a second material 226 (denoted in the Figure by means of a black dot). The extruded gum material contains a tooth-whitening component (such as hydrated silica), the first material 224 incorporates a breath freshening agent (such as a peppermint oil) and the second material 226 incorporates a cooling agent (such as N,2,3-trimethyl-2-isopropyl butanamide (WS-23)). When the confectionery material 220 is chewed, the tooth-whitening component in the gum helps to clean teeth, whilst the breath freshening and cooling agent in the capillaries are gradually released- thus providing a cool and refreshing feeling in the mouth.

Lastly, Figure 20 shows a cylindrical confectionery product 230 having a circular cross section. A number of capillaries are grouped together in fours (each group shown by a dotted line) and extend around the periphery of the product. The confectionery product is formed of an extruded chocolate 232. A first group of capillaries 234 contain fluid cocoa butter, where as a second group of capillaries 236 contain a praline filling. Consumption of the confectionery product 230 provides an enhanced eating experience, due to the different textures of the chocolate, cocoa butter and praline. Both the cocoa butter and praline have an extended release profile as they are contained with individual capillaries within the chocolate.

The foregoing embodiments are not intended to limit the scope of protection afforded by the claims, but rather to describe examples as to how the invention may be put into practice.

## Claims

1. A confectionery product comprising an extruded body portion, the body portion being chewing gum, bubble gum, or gum base and having a plurality of capillaries disposed therein, one or more of the capillaries being at least partially filled with a fill material which is a different material from that of the extruded body portion, the fill material comprising an active and/or reactive component and wherein two or more different active/reactive components are provided in the same or different capillaries.

2. A confectionery product as claimed in claim 1, wherein two or more capillaries are at least partially filled with different active/reactive components.

3. A confectionery product as claimed in claim 1 or claim 2, wherein the active and/or reactive component is encapsulated.

4. A confectionery product as claimed in any preceding claim, wherein the capillaries are filled with a liquid material which solidifies.

5. A confectionery product as claimed in any preceding claim, wherein the product further comprises a coating portion to envelop the extruded body portion.

6. A confectionery product as claimed in any preceding claim, wherein the capillaries have an average diameter or width of no more than 2 millimeters.

7. A confectionery product as claimed in any preceding claim where the body portion comprises a first extruded portion and a second extruded portion, wherein each portion has a plurality of capillaries disposed therein, and the capillaries of the first and second portions are:
a) discontinuous; and/or
b) continuous and oriented in more than one direction.

8. A confectionery product as claimed in claim 7, wherein the capillaries of each portion are formed substantially parallel to one another; and/or
wherein the first and second portions are in a stacked configuration, such that the capillaries of the first and second portions are substantially parallel to each other; and/or
wherein the first and second portions are in a folded configuration; and/or wherein the first and second portions are discontinuous and the capillaries are oriented in a random configuration in relation to one another.

9. A process for manufacturing a confectionery product comprising an extruded body portion having a plurality of capillaries disposed therein, the process comprising the steps of:
a) extruding an extrudable confectionery material with a plurality of capillaries disposed therein, the extrudable confectionery material being chewing gum, bubble gum, or gum base; and
b) at least partially filling one or more capillaries with a fill material which is different material from that of the extruded body portion, the fill material comprising an active and/or reactive component and wherein two or more different active/reactive components are provided in the same or different capillaries.

10. A process as claimed in claim 9, further comprising a step selected from:
c) cutting the extrudate into two or more pieces having a plurality of capillaries disposed therein and forming a confectionery product incorporating the pieces; or
d) folding the extrudate and forming a confectionery product incorporating the folded extrudate.

11. A process as claimed in claim 9 or claim 10, wherein two or more capillaries are at least partially filled with different active/reactive components.

12. A process as claimed in any of claims 9 to 11, wherein the active and/or reactive component comprises an effervescent material.

13. A process as claimed in any of claims 9 to 12, wherein the fill material comprises a particulate material; or
wherein the fill material comprises a liquid, wherein the liquid optionally solidifies after deposition.

14. A process as claimed in any of claims 9 to 13, wherein the process further comprises the step of quench cooling the extrudate after extrusion,
wherein the quench cooling optionally uses a fluid; and/or
wherein the process further comprises the step of, after extrusion, stretching the extrudate; and/or
wherein the process further comprises the step of enveloping the confectionery product in a coating.

15. A process as claimed in any of claims 9 to 14, wherein the process is for producing a confectionery product as claimed in any one of claims 1 to 8.

## Patentansprüche

1. Süßwarenprodukt umfassend einen extrudierten Körperanteil, wobei es sich bei dem Körperanteil um Kaugummi, Bubble Gum oder einer Gummigrundmasse handelt und sich in diesem eine Vielzahl von Kapillaren befindet, wobei eine oder mehrere der Kapillaren mindestens teilweise mit einem Füllmaterial gefüllt ist/sind, bei dem es sich um ein anderes Material als das des extrudierten Körperanteils handelt, wobei das Füllmaterial einen aktiven und/oder reaktiven Bestandteil umfasst und wobei zwei oder mehr unterschiedliche aktive/reaktive Bestandteile in derselben oder unterschiedlichen Kapillare(n) bereitgestellt werden.

2. Süßwarenprodukt nach Anspruch 1, wobei zwei oder mehr Kapillaren zumindest teilweise mit unterschiedlichen aktiven/reaktiven Bestandteilen gefüllt sind.

3. Süßwarenprodukt nach Anspruch 1 oder Anspruch 2, wobei der aktive und/oder reaktive Bestandteil eingekapselt ist.

4. Süßwarenprodukt nach einem der vorstehenden Ansprüche, wobei die Kapillaren mit einem flüssigen Material gefüllt sind, das sich verfestigt.

5. Süßwarenprodukt nach einem der vorstehenden Ansprüche, wobei das Produkt darüber hinaus einen Überzuganteil umfasst, um den extrudierten Körperanteil zu umhüllen.

6. Süßwarenprodukt nach einem der vorstehenden Ansprüche, wobei die Kapillaren eine(n) durchschnittliche(n) Durchmesser oder Breite von nicht mehr als 2 Millimetern besitzen.

7. Süßwarenprodukt nach einem der vorstehenden Ansprüche, wobei der Körperanteil einen ersten extrudierten Anteil und einen zweiten extrudierten Anteil umfasst, wobei sich in jedem dieser Anteile eine Vielzahl von Kapillaren befindet und die Kapillaren des ersten und des zweiten Anteils:
a) diskontinuierlich sind und/oder
b) kontinuierlich und in mehr als eine Richtung ausgerichtet sind.

8. Süßwarenprodukt nach Anspruch 7, wobei die Kapillaren jedes Anteils im Wesentlichen parallel zueinander gebildet werden und/oder
wobei der erste und der zweite Anteil sich in einer gestapelten Konfiguration befinden, so dass die Kapillaren des ersten und des zweiten Anteils im Wesentlichen parallel zueinander sind, und/oder
wobei der erste und der zweite Anteil sich in einer gefalteten Konfiguration befinden und/oder wobei der erste und der zweite Anteil diskontinuierlich sind und die Kapillaren sich in einer zufallsbestimmten Ausrichtung relativ zueinander befinden.

9. Verfahren zur Herstellung eines Süßwarenprodukts umfassend einen extrudierten Körperanteil, in dem sich eine Vielzahl von Kapillaren befindet, wobei das Verfahren die Schritte umfasst:
a) Extrudieren eines extrudierbaren Süßwarenmaterials mit einer Vielzahl von darin befindlichen Kapillaren, wobei es sich bei dem extrudierbaren Süßwarenmaterial um Kaugummi, Bubble Gum oder eine Gummigrundmasse handelt, und
b) mindestens teilweises Füllen von einer oder mehreren Kapillare(n) mit einem Füllmaterial, das sich von dem Material des extrudierten Körperanteils unterscheidet, wobei das Füllmaterial einen aktiven und/oder reaktiven Bestandteil umfasst und wobei zwei oder mehr unterschiedliche aktive/reaktive Bestandteile in derselben oder unterschiedlichen Kapillare(n) bereitgestellt werden.

10. Verfahren nach Anspruch 9, darüber hinaus einen Schritt umfassend, der ausgewählt ist aus:
c) Zerschneiden des Extrudats in zwei oder mehr Teile, in denen sich eine Vielzahl von Kapillaren befindet, und Bilden eines Süßwarenprodukts, das die Teile aufweist, oder
d) Falten des Extrudats und Bilden eines Süßwarenprodukts, dass das gefaltete Extrudat aufweist.

11. Verfahren nach Anspruch 9 oder Anspruch 10, wobei zwei oder mehr Kapillaren zumindest teilweise mit unterschiedlichen aktiven/reaktiven Bestandteilen gefüllt sind.

12. Verfahren nach einem der Ansprüche 9 bis 11, wobei der aktive und/oder reaktive Bestandteil ein aufschäumendes Material umfasst.

13. Verfahren nach einem der Ansprüche 9 bis 12, wobei das Füllmaterial ein partikuläres Material umfasst oder
wobei das Füllmaterial eine Flüssigkeit umfasst, wobei die Flüssigkeit sich optional nach dem Einbringen verfestigt.

14. Verfahren nach einem der Ansprüche 9 bis 13, wobei das Verfahren darüber hinaus den Schritt des Quenchkühlens des Extrudats nach der Extrusion umfasst,
wobei beim Quenchkühlen optional eine Flüssigkeit verwendet wird, und/oder wobei das Verfahren darüber hinaus nach dem Extrudieren den Schritt des Dehnens des Extrudats umfasst, und/oder
wobei das Verfahren darüber hinaus den Schritt des Umhüllens des Süßwarenprodukts in einem Überzug umfasst.

15. Verfahren nach einem der Ansprüche 9 bis 14, wobei das Verfahren zur Herstellung eines Süßwarenprodukts nach einem der Ansprüche 1 bis 8 dient.

## Revendications

1. Produit de confiserie comprenant une partie de corps extrudée, la partie de corps étant de la gomme à mâcher, de la gomme à bulles ou une base de gomme et présentant une pluralité de capillaires disposée à l'intérieur de celle-ci, un ou plusieurs des capillaires étant au moins partiellement remplies d'une matière de remplissage qui est différente de celle de la partie de corps extrudée, la matière de remplissage comprenant un composant actif et/ou réactif, et dans lequel deux ou plusieurs composants actifs et/ou réactifs différents sont prévus dans le même capillaire ou des capillaires différents.

2. Produit de confiserie selon la revendication 1, dans lequel deux ou plusieurs capillaires sont au moins partiellement remplis de composants actifs et/ou réactifs différents.

3. Produit de confiserie selon la revendication 1 ou 2, dans lequel le composant actif et/ou réactif est encapsulé.

4. Produit de confiserie selon l'une quelconque des revendications précédentes, dans lequel les capillaires sont remplis d'une substance liquide qui se solidifie.

5. Produit de confiserie selon l'une quelconque des revendications précédentes, dans lequel le produit comprend en outre une partie d'enrobage destinée à envelopper la partie de corps extrudée.

6. Produit de confiserie selon l'une quelconque des revendications précédentes, dans lequel les capillaires présentent un diamètre ou une largeur moyen(ne) ne dépassant pas les 2 millimètres.

7. Produit de confiserie selon l'une quelconque des revendications précédentes, où la partie de corps comprend une première partie extrudée et une seconde partie extrudée, dans lequel chaque partie présente une pluralité de capillaires disposée à l'intérieur de celle-ci, et les capillaires des première et seconde parties étant :
a) discontinus ; et/ou
b) continus et orientés dans plusieurs directions.

8. Produit de confiserie selon la revendication 7, dans lequel les capillaires de chaque partie sont formés de manière sensiblement parallèle les uns aux autres ; et/ou
dans lequel les première et seconde parties sont disposées selon une configuration empilée, de sorte que les capillaires des première et seconde parties sont sensiblement parallèles les uns aux autres ;
et/ou
dans lequel les première et seconde parties sont disposées selon une configuration repliée ; et/ou
dans lequel les première et seconde parties sont discontinues et les capillaires sont orientés selon une configuration aléatoire les uns par rapport aux autres.

9. Procédé de fabrication d'un produit de confiserie comprenant une partie de corps extrudée présentant une pluralité de capillaires disposée à l'intérieur de celle-ci, le procédé comprenant les étapes consistant à :
a) extruder une matière de confiserie extrudable présentant une pluralité de capillaires disposée à l'intérieur de celle-ci, la matière de confiserie extrudable étant de la gomme à mâcher, de la gomme à bulles, ou une base de gomme ; et
b) remplir au moins partiellement un ou plusieurs capillaires d'une matière de remplissage qui est différente de la matière de la partie de corps extrudée, la matière de remplissage comprenant un composant actif et/ou réactif, et dans lequel deux ou plusieurs composants actifs et/ou réactifs sont prévus dans le même capillaire ou dans des capillaires différents.

10. Procédé selon la revendication 9, comprenant en outre une étape choisie parmi :
c) la découpe de l'extrudat en deux ou plusieurs morceaux présentant une pluralité de capillaires disposée à l'intérieur de celui-ci et formant un produit de confiserie intégrant les morceaux ; ou
d) le pliage de l'extrudat et la formation d'un produit de confiserie intégrant l'extrudat plié.

11. Procédé selon la revendication 9 ou 10, dans lequel deux ou plusieurs capillaires sont au moins partiellement remplis de composants actifs/réactifs différents.

12. Procédé selon l'une quelconque des revendications 9 à 11, dans lequel le composant actif et/ou réactif comprend une substance effervescente.

13. Procédé selon l'une quelconque des revendications 9 à 12, dans lequel la matière de remplissage comprend une matière particulaire ; ou
dans lequel la matière de remplissage comprend un liquide, dans lequel le liquide se solidifie facultativement après son dépôt.

14. Procédé selon l'une quelconque des revendications 9 à 13, dans lequel le procédé comprend en outre l'étape consistant, après l'extrusion, à refroidir par trempage l'extrudat,
dans lequel le refroidissement par trempage utilise facultativement un liquide ;
et/ou
dans lequel le procédé comprend en outre l'étape consistant, après l'extrusion, à étirer l' extrudat ; et/ou
dans lequel le procédé comprend en outre l'étape consistant à envelopper le produit de confiserie dans un enrobage.

15. Procédé selon l'une quelconque des revendications 9 à 14, dans lequel le procédé est destiné à fabriquer un produit de confiserie selon l'une quelconque des revendications 1 à 8.
